# EUROPÄISCHE PATENTSCHRIFT

(11) **EP 1 568 435 B1**
(45) Veröffentlichungstag und Bekanntmachung des Hinweises auf die Patenterteilung: **15.04.2009**
(21) Anmeldenummer: 04004604.7
(22) Anmeldetag: 28.02.2004
(51) Int. Cl.: B23K 26/067, B23K 26/04, B23K 26/14

(54) **Laserbearbeitungsmaschine**
Laser machining device
Machine de travail au laser

(43) Veröffentlichungstag der Anmeldung: 31.08.2005
(73) Patentinhaber: Trumpf Laser- und Systemtechnik GmbH, 71254 Ditzingen (DE)
(72) Erfinder: Kettner-Reich, Andreas, 70369 Stuttgart (DE)
(74) Vertreter: Bäcker, Rüdiger

(56) Entgegenhaltungen:
- EP-A- 1 020 249
- EP-A- 1 199 128
- WO-A-01/26859
- FR-A- 2 823 688
- PATENT ABSTRACTS OF JAPAN Bd. 2000, Nr. 21, 3. August 2001 (2001-08-03) & JP 2001 096384 A (MITSUBISHI HEAVY IND LTD; NIKON CORP), 10. April 2001 (2001-04-10)

## Beschreibung

Die Erfindung betrifft eine Laserbearbeitungsmaschine mit einer Fokussiereinrichtung für den Laserstrahl und mit Mitteln zur Unterstützung der Laserbearbeitung gemäß dem Oberbegriff des Anspruchs 1 (Siehe FR-A-2 823 688 und EP-A-1 189 128).

Beispielsweise sind durch Sensoren zur kontinuierlichen Schweißnahtverfolgung beim Laserschweißen ausgebildete Mittel zur Unterstützung der Laserbearbeitung allgemein bekannt.

Diese Sensoren überwachen die genaue Lage der Fügestelle. Weiterhin erlauben die Sensoren in Verbindung mit einer Regel- und Steuereinheit den Ausgleich von Toleranzen während des Schweißprozesses. Dadurch wird erreicht, dass sich der Laserschweißkopf immer direkt über der Fügestelle befindet. Vor allem in Verbindung mit Industrierobotern sind Sensoren zur Schweißnahtverfolgung und/oder zur Prozesskontrolle, beispielsweise zur Kontrolle der Nahtgeometrie, wichtig. Neben der Schweißnahtverfolgung ist auch die Prozesskontrolle von Bedeutung. Während der Laserbearbeitung werden der Einkoppelgrad des Laserstrahls, die Spritzerbildung und die Schweißtiefe überwacht.

Der Sensor wird meist mit entsprechendem Abstand zum Laserstrahl angeordnet. Der Sensor ist entweder schräg auf den Bearbeitungspunkt gerichtet, "blickt" also unter einem Winkel auf die Bearbeitungsstelle, oder er ist senkrecht auf eine Stelle vor oder hinter der Bearbeitungsstelle gerichtet, "blickt" also nicht in den Bearbeitungsprozess selbst sondern auf eine Stelle, die gegenüber der Bearbeitungsstelle vor- oder nachläuft. Bei diesen bekannten Anordnungen bereitet das exakte schnelle Nachführen des Sensors bei der dreidimensionalen Laserbearbeitung Schwierigkeiten bzw. erfordert aufwändige technische Lösungen. Beispielsweise sind Zusatzachsen zur Bewegung des Sensors notwendig; die gelieferten Daten sind entweder verzerrt oder stammen nicht vom Prozess selbst. Ein weiterer Nachteil sind die vergrößerten Abmessungen des Kopfes, die sogenannte Störkontur.

Der Anmelder hat sich die Aufgabe gestellt, eine möglichst einfache Anordnung der Mittel zur Untersützung der Laserbearbeitung zu erreichen, welche eine schnelle Nachführung ohne Orientierungsprobleme bei der dreidimensionalen Laserbeitung erlaubt und die Störkontur minimiert.

Erfindungsgemäß wird zur Lösung der Aufgabe eine Laserbearbeitungsmaschine gemäß Anspruch 1 vorgeschlagen.

Gemäß der Erfindung ergibt sich oberhalb der Wirkstelle des Laserstrahls ein gut zugänglicher Freiraum, über den eine Prozessbeobachtung zentrisch zum Prozess erfolgt. Dies erleichtert oder ermöglicht erst die gezielte Nachführung solcher Einrichtungen bei der 3D-Bearbeitung. Erfindungsgemäß ist eine Beweglichkeit des Sensors mittels einer Schwenkbarkeit und/oder Verschiebbarkeit in dem Freiraum unterhalb der Strahlteilung vorzugsweise direkt über der Fügestelle vorgesehen.

Mithilfe des Sensors kann auch kontrolliert werden, welche Wirkung Laserstrahlteile unterschiedlicher Intensität auf die Fügestelle haben, wenn der Strahlteiler zur Aufteilung des Laserstrahls in zwei Laserstrahlteile unterschiedlicher Intensität vorgesehen ist. Selbstverständlich können die Laserstrahlteile auch gleiche Intensität haben.

Die Erfindung betrifft die Laserbearbeitung und wird im Folgenden anhand des Laserschweißens beschrieben.

Drei Ausführungsbeispiele der Erfindung sind in der Zeichnung schematisch dargestellt und werden nachfolgend mit Bezug zur Figur der Zeichnung näher erläutert. Es zeigt:
- **Fig. 1**: eine dreidimensionale Ansicht einer Doppelfokussiereinrichtung einer ersten Laserbearbeitungsmaschine;
- **Fig. 2**: einen Schnitt längs einer Linie II-II gemäß Fig. 1;
- **Fig. 3**: einen Schnitt längs einer Linie III-III gemäß Fig. 1;

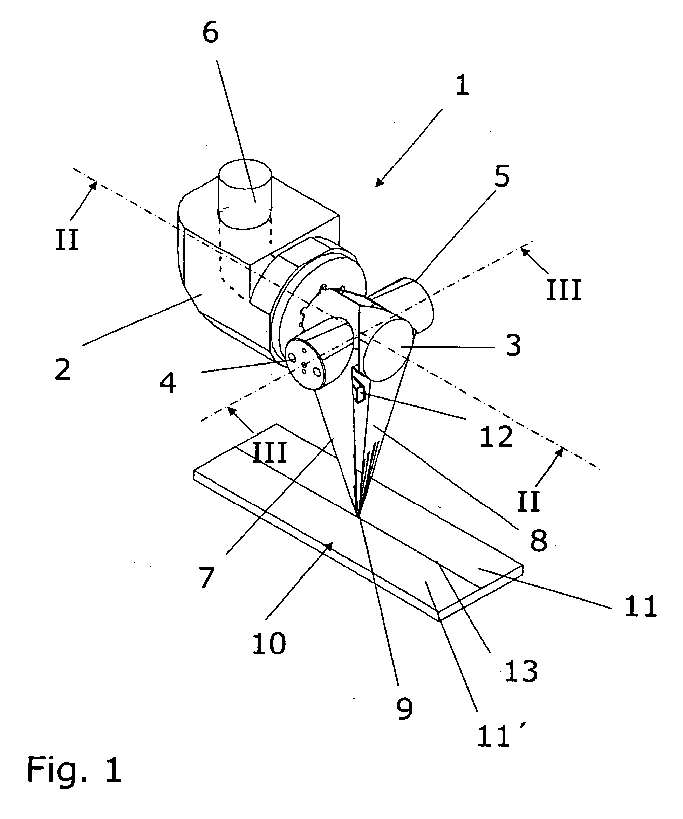

Aus der **Fig. 1** ist ersichtlich, dass eine Doppelfokussiereinrichtung **1** einer Laserbearbeitungsmaschine ein Winkelgetriebe **2,** einen Strahlteiler **3** und zwei Fokussierspiegel **4** und **5** umfasst. Ein Laserstrahl **6** wird zunächst umgelenkt und mithilfe des Strahlteilers 3 in zwei Laserstrahlteile 7 und 8 geteilt, welche anschließend mithilfe der Fokussierspiegel 4 und 5 in einem Fokus **9** auf einer Werkstückoberfläche **10** eines Werkstücks **11** bzw. **11'** zusammengeführt werden. Ein Sensor **12** ist zur Verfolgung einer Schweißnaht **13** vorgesehen.

Die beiden Fokussierspiegel 4 und 5 können unabhängig voneinander mittels Piezostellantrieben in drei Dimensionen verstellt bzw. verschwenkt werden. An Stelle des einzigen Fokus 9 können somit auch zwei dicht nebeneinander oder hintereinander liegende Fokusse erzeugt werden. Die Fokusse können relativ zueinander eingestellt werden.

Der Strahlteiler 3 kann im Zentrum des auftreffenden Laserstrahls 6 fix positioniert sein, wie dies Fig. 1 zeigt. Der Strahlteiler 3 kann aber auch beweglich angeordnet sein und aus dem Zentrum bewegt werden. Dadurch kann die Lage der Fokusse korrigiert oder eine asymmetrische Leistungsverteilung erreicht werden. Die beiden Laserstrahlteile 7 und 8 können unterschiedliche Intensitäten aufweisen. Der eine Laserstrahlteil 7 kann beispielsweise 30 % der Gesamtleistung besitzen und der Vorwärmung dienen. Der andere Laserstrahlteil 8 kann 70 % der Gesamtleitung besitzen und zum Schweißen genutzt werden.

Der durch ein Prisma ausgebildete Strahlteiler 3 befindet sich an der Position, an welcher normalerweise der einzige Fokussierspiegel einer Einrichtung ohne Strahlteiler angeordnet ist. Dadurch ergibt sich oberhalb der Wirkstelle des Laserstrahls ein gut zugänglicher Freiraum, über den eine zentrische Prozessbeobachtung durch den Sensor 12 und/oder eine Zuführung eines Zusatzwerkstoffs zentrisch zum Prozess erfolgt.

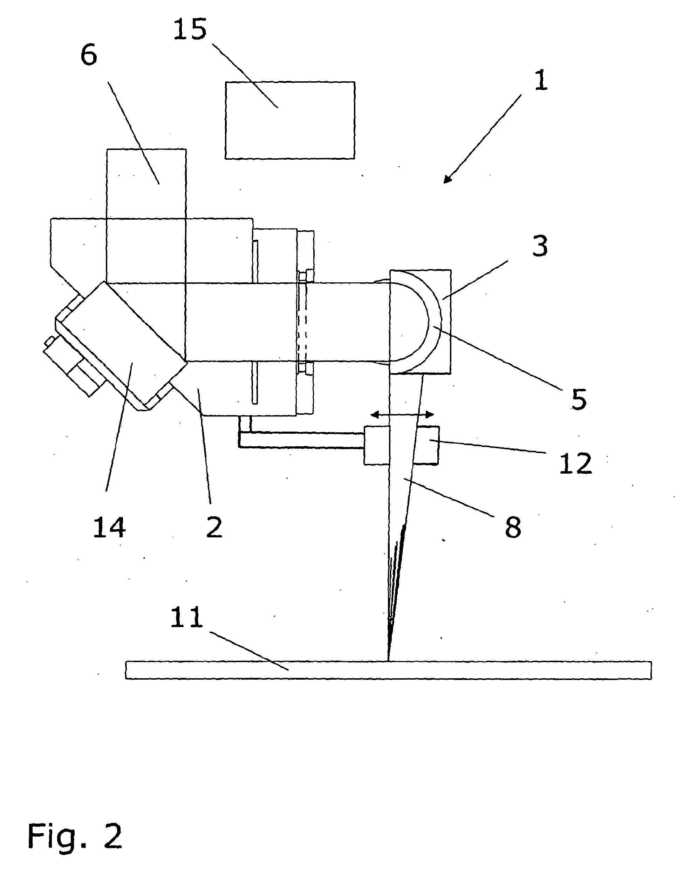

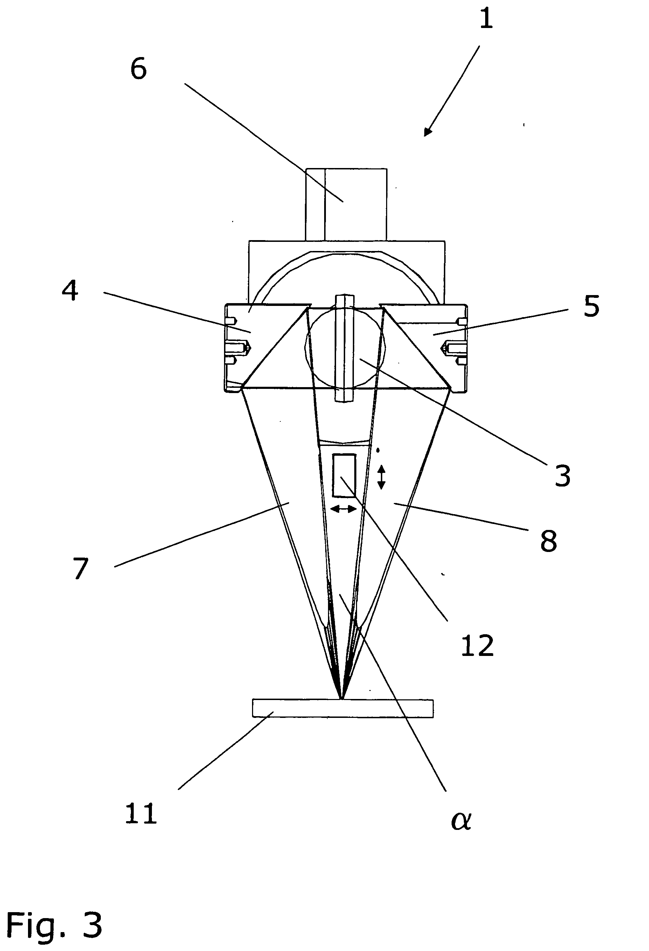

Den **Fign. 2** und **3** kann die Strahlteilung deutlicher entnommen werden. Der Laserstrahl 6 wird an einem Umlenkspiegel **14** umgelenkt. Anschließend trifft der Laserstrahl 6 auf den Strahlteiler 3. Der Laserstrahlteil 8 wird mithilfe des Fokussierspiegels 5 auf die Werkstücke 11, 11' aus Blech fokussiert.

Der Sensor 12 überwacht den Einkoppelgrad der Laserstrahlteile 7 und 8, die Spritzerbildung und die Schweißtiefe. Änderungen im Bereich der Werkstückoberfläche können während des Laserschweißens erkannt werden. Der Sensor 12 steht in Verbindung mit einer Regel- und Steuereinheit **15** sowie dem Winkelgetriebe 2 zur Positionierung der Doppelfokussiereinrichtung 1, so dass eine Nachjustierung des Sensors 12 ermöglicht wird. Der Übersichtlichkeit halber sind Kabel und Verbindungen der in die Laserbearbeitungsmaschine integrierten Steuereinheit 15 nicht gezeigt.

Die Stellantriebe für die beiden Fokussierspiegel und - falls vorhanden - für den Strahlteiler stehen ebenfalls mit der Regel- und Steuereinheit in Verbindung, so dass auch deren Position und/oder Orientierung in Abhängigkeit der vom Sensor erfassten Daten geregelt werden kann.

Strahlteiler 3 und Strahlteile 7 und 8 begrenzen einen Raum - im Querschnitt gemäß Fig. 3 gesehen: ein "Dreieck" - unterhalb des Strahlteilers 3 und ausgehend von bzw. über der Fügestelle. Dieses "Dreieck" wird zur Anordnung des Sensors 12 genutzt. Strahlteile 7 und 8 treffen unter einem Winkel < 90° von der Seite und nicht mehr direkt von oben auf die Fügestelle auf und schließen zusammen einen Winkel α ein, welcher sich ausgehend von der Fügestelle öffnet. Direkt über der Fügestelle wird ein Freiraum geschaffen, in welchem sich der Sensor 12 befindet. Der Sensor 12 ist schwenkbar und verschiebbar (siehe Doppelpfeile in Fig. 2 und 3) angeordnet, um den Sensor 12 zwischen den beiden Strahlteilen 7 und 8 innerhalb des Winkels α direkt über der Fügestelle anzuordnen.

### BEZUGSZEICHENLISTE

- 1: Fokussiereinrichtung
- 2: Winkelgetriebe
- 3: Strahlteiler
- 4: Fokussierspiegel
- 5: Fokussierspiegel
- 6: Laserstrahl
- 7: Laserstrahlteil
- 8: Laserstrahlteil
- 9: Fokus
- 10: Werkstückoberfläche
- 11: Werkstück
- 11: Werkstück
- 12: Sensor
- 13: Schweißnaht
- 14: Umlenkspiegel
- 15: Steuereinheit

## Patentansprüche

1. Laserbearbeitungsmaschine mit einer Fokussiereinrichtung (1), die einen Laserstrahl (6) auf ein zu bearbeitendes Werkstück (11, 11') fokussiert und die einen Strahlteiler (3) aufweist, der den Laserstrahl (6) in zwei auf das Werkstück (11, 11') fokussierte, voneinander beabstandete Laserstrahlteile (7, 8) aufteilt, welche auf dem Werkstück (11, 11') wieder zusammengeführt sind, und mit Mitteln (12) zur Unterstützung der Laserbearbeitung, wobei die Mittel (12) in einem Freiraum zwischen den beiden Laserstrahlteilen (7, 8) direkt über dem Bearbeitungsbereich des Werkstücks (11, 11') angeordnet sind,
**dadurch gekennzeichnet,**
**dass** die Fokussiereinrichtung (1) an einem Winkelgetriebe (2) befestigt ist, welches vor dem Strahlteiler (3) der Fokussiereinrichtung (1) einen Umlenkspiegel (14) für den Laserstrahl (6) aufweist, und
**dass** die Mittel durch einen Sensor (12) zur Überwachung des Bearbeitungsbereichs des Werkstücks (11, 11') ausgebildet sind, wobei der Sensor (12) in dem Freiraum zwischen den beiden Laserstrahlteilen (7, 8) schwenkbar und/oder verschiebbar angeordnet ist.

2. Laserbearbeitungsmaschine nach Anspruch 1, **dadurch gekennzeichnet, dass** der Strahlteiler (3) zur Aufteilung des Laserstrahls (6) in zwei Laserstrahlteile (7, 8) unterschiedlicher Intensität vorgesehen ist.

3. Laserbearbeitungsmaschine nach Anspruch 1 oder 2, **dadurch gekennzeichnet, dass** die Mittel (12) direkt über dem Fokus (9) des Laserstrahls (6) angeordnet sind.

## Claims

1. Laser processing machine having a focusing device (1) which focuses a laser beam (6) on to a workpiece (11, 11') to be processed and has a beam splitter (3) which splits the laser beam (6) into two mutually spaced laser beam portions (7, 8) which are focused on the workpiece (11, 11') and which are brought together again on the workpiece (11, 11'), and having means (12) for aiding the laser processing operation, the means (12) being arranged in a space between the two laser beam portions (7, 8) directly above the processing region of the workpiece (11, 11'),
**characterised in that**
the focusing device (1) is secured to an angular gear (2) which has a diverting mirror (14) for the laser beam (6) upstream of the beam splitter (3) of the focusing device (1), and **in that** the means are formed by a sensor (12) for monitoring the processing region of the workpiece (11, 11'), the sensor (12) being arranged pivotably and/or displaceably in the space between the two laser beam portions (7, 8).

2. Laser processing machine according to claim 1, **characterised in that** the beam splitter (3) is provided for splitting the laser beam (6) into two laser beam portions (7, 8) of different intensity.

3. Laser processing machine according to claim 1 or 2, **characterised in that** the means (12) are arranged directly above the focus (9) of the laser beam (6).

## Revendications

1. Machine d'usinage par laser, comportant un dispositif de focalisation (1) qui focalise un faisceau laser (6) sur une pièce (11, 11') à usiner et qui présente un diviseur de faisceau (3) qui divise le faisceau laser (6) en deux parties de faisceau laser (7, 8) distantes l'une de l'autre, focalisées sur la pièce (11, 11'), lesquelles sont de nouveau réunies sur la pièce (11, 11'), et comportant des moyens (12) pour soutenir l'usinage par laser, les moyens (12) étant disposés dans un espace libre entre les deux parties de faisceau laser (7, 8) directement au-dessus de la zone d'usinage de la pièce (11, 11'),
**caractérisée en ce**
**que** le dispositif de focalisation (1) est fixé sur un renvoi d'angle (2) qui présente, avant le diviseur de faisceau (3) du dispositif de focalisation (1), un miroir de déviation (14) pour le faisceau laser (6), et que les moyens sont formés par un capteur (12) servant à surveiller la zone d'usinage de la pièce (11, 11'), le capteur (12) étant disposé avec possibilité de pivotement et/ou de translation dans l'espace libre entre les deux parties de faisceau laser (7, 8).

2. Machine d'usinage par laser selon la revendication 1, **caractérisée en ce que** le diviseur de faisceau (3) prévu pour diviser le faisceau laser (6) en deux parties de faisceau laser (7, 8) d'intensité différente.

3. Machine d'usinage par laser selon la revendication 1 ou 2, **caractérisée en ce que** les moyens (12) sont disposés directement au-dessus du foyer (9) du faisceau laser (6).
